Europäisches Patentamt

European Patent Office

Office européen des brevets

(11) Numéro de publication: **0 262 028 B1**

# FASCICULE DE BREVET EUROPEEN

(45) Date de publication de fascicule du brevet: 27.03.91

(51) Int. Cl.⁵: **G11B 5/31**

(21) Numéro de dépôt: **87402045.6**

(22) Date de dépôt: **14.09.87**

(54) Procédé de réalisation de têtes magnétiques en couches minces et à structure planaire et tête obtenue par ce procédé.

(30) Priorité: **17.09.86 FR 8613010**

(43) Date de publication de la demande:
**30.03.88 Bulletin 88/13**

(45) Mention de la délivrance du brevet:
**27.03.91 Bulletin 91/13**

(84) Etats contractants désignés:
**BE CH DE GB IT LI NL**

(56) Documents cités:
**EP-A- 0 219 370**
**JP-A-61 115 212**
**US-A- 3 672 043**
**US-A- 4 402 801**

**PATENT ABSTRACTS OF JAPAN**, vol. 5, no. 5
**(P-44)[677], 14 janvier 1981; & JP-A-55 135
324 (FUJITSU K.K.) 22-10-1980**

(73) Titulaire: **COMMISSARIAT A L'ENERGIE ATO-
MIQUE Etablissement de Caractère Scientifique Technique et Industriel
31/33, rue de la Fédération
F-75015 Paris(FR)**

(72) Inventeur: **Lazzari, Jean-Pierre
45, Chemin Malanot
F-38700 Corenc(FR)**

(74) Mandataire: **Mongrédien, André et al
c/o BREVATOME 25, rue de Ponthieu
F-75008 Paris(FR)**

Rank Xerox (UK) Business Services

## Description

La présente invention a pour objet un procédé de réalisation de têtes magnétiques en couches minces et à structure planaire et une tête obtenue par ce procédé.

On connaît deux types de têtes magnétiques à couches minces : celles qui sont montées perpendiculairement à la couche magnétique à lire ou à enregistrer et celles qui sont montées parallèlement à cette couche.

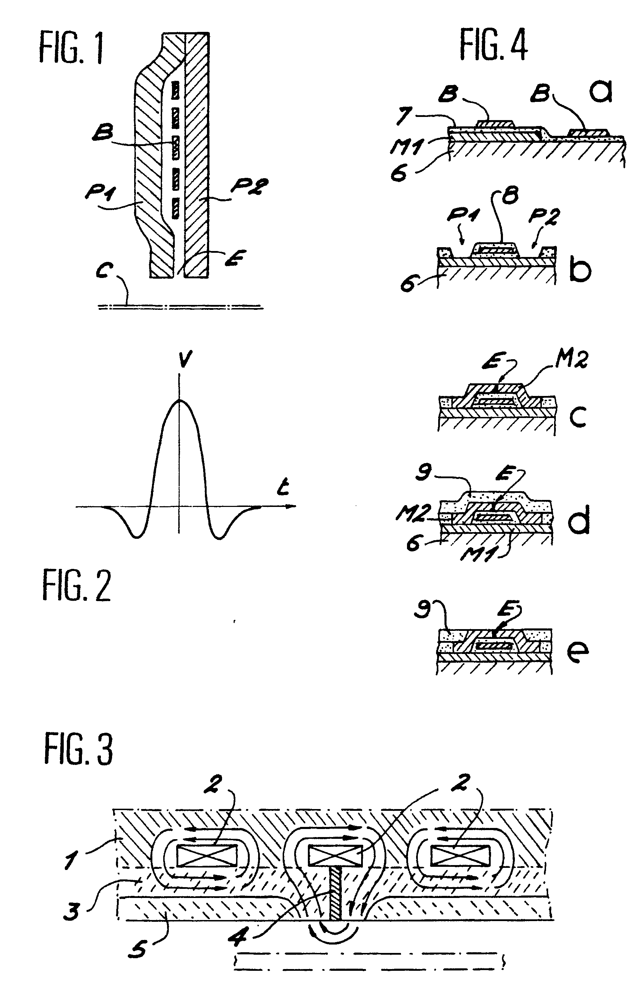

La figure 1 montre par exemple une tête formée de deux pièces polaires P1 et P2 définissant un entrefer E, un bobinage B entourant ces pièces polaires. La couche d'enregistrement C passe devant l'entrefer E. Une telle tête est décrite par exemple dans l'abrégé de brevet japonais vol. 5, n °150, (P-81) (822) du 22 septembre 1981.

Le gradient de champ produit par une telle tête est élevé et engendre des champs démagnétisants intenses dans la couche d'enregistrement, ce qui rend l'écriture difficile. Par aillurs, à la lecture, on obtient un signal V tel que celui de la figure 2 : à l'aplomb des angles extérieurs des pièces polaires, il apparaît des inversions de polarité de la tension, ce qui entraîne de sérieux problèmes dans le traitement de l'information lue.

Pour ces raisons, on préfère utiliser des têtes montées horizontalement, comme celle qui est représentée sur la figure 3. Une telle tête est décrite dans la demande de brevet européen 85400136.9 publiée sous le n ° 0 152 326. On y voit une première couche magnétique 1, dans laquelle est formé un bobinage 2, une seconde couche magnétique 3 divisée en deux parties par un espaceur amagnétique 4. Une couche dure 5 protège l'ensemble et assure la planéité de la couche.

La figure 4 illustre un procédé connu de fabrication d'une tête horizontale. Ce procédé est décrit dans l'abrégé de brevet japonais vol. 5, n °5, (P-44) (677), 14 janvier, 1981. Sur un substrat 6, on dépose une première couche magnétique M1 puis une couche isolante 7 et un bobinage B (partie a) ; on dépose ensuite une couche isolante 8 et l'on grave deux puits P1, P2 (partie b). On dépose alors une seconde couche magnétique M2 qui vient en contact avec la première grâce aux deux puits P1 et P2 (partie c). Puis l'on forme un entrefer. On dépose ensuite une couche en verre (partie d) et l'on planifie l'ensemble (partie e).

Bien que donnant satisfaction à certains égards, ces dispositifs et procédés de l'art antérieur présentent des inconvénients. Dans le cas de la tête de la figure 3, on a encore des extrémités extérieurs de pièces polaires qui peuvent engendrer des inversions du signal de lecture. Dans le procédé illustré sur la figure 4, on évite la finesse de l'extrémité des pièces polaires mais l'entrefer est ouvert et relativement large: il se comble peu à peu de particules magnétiques, qui court-circuitent magnétiquement la tête. Enfin, le flux magnétique engendré par le bobinage suit un circuit de section quasi-constante et il n'y a donc aucune concentration de flux au niveau de l'entrefer. Par ailleurs, dans le procédé de la figure 4 le bobinage B n'est pas dans un plan unique mais dans deux plans distincts : un plan correspondant à la partie centrale, audessus de la première pièce polaire, et un plan, plus bas, correspondant aux deux parties latérales (une seule est représentée sur la droite de la figure 4, partie a). Les parties latérales permettent de refermer l'enroulement autour des pièces polaires. De plus, on voit que la pièce polaire M1 n'est pas enterrée dans le substrat 6, ce qui conduit à une tête qui présente un relief important. Enfin, les parties de la pièce polaire M2 non recouvertes par la couche de protection 9 sont très larges (puisqu'elles sont sensiblement aussi larges que le bobinage), ce qui rend la tête très fragile.

La présente inventio n a pour but de remédier à ces inconvénients. A cette fin, elle propose un procédé de fabrication qui permet d'obtenir un entrefer étroit formé d'une couche amagnétique et des pièces polaires de forme telle qu'elles conduisent à une concentration de flux au voisinage de l'entrefer et offrent une faible surface sans protection. Par ailleurs, le procédé de l'invention permet d'obtenir une structure enter-rée dans un substrat, donc sans relief. On peut ajouter encore que le procédé de l'invention ne nécessite pas la dernière opération de polissage qui est néces-saire dans le procédé de l'art antérieur.

Le procédé de l'invention met en oeuvre des opérations de dépôt de couches minces et de gravures qui sont usuelles dans la technologie des circuits intégrés ainsi que des opérations de dépôt électrolytiintégrés ainsi que des opérations de dépôt électrolyti-que de diverses couches magnétiques.

De telles opérations sont déjà mises en oeuvre, mais de manière différente, dans EP-A-0 219 370 ayant pour objet un procédé de réalisation d'une tête magnétique horizontale enterrée et une tête magnétique obtenue par ce procédé.

De même, le document US-A-4,402,801 décrit une technique de réalisation de têtes magnétiques à couches minces utilisant le dépôt électrolytique.

Mais, dans ces deux techniques antérieures, il n'y a pas de concentration de flux au voisinage de l'entrefer.

Le procédé de l'invention est défini dans La revendication 1 annexée et la tête obtenue dans la revendication 4.

On comprendra mieux l'invention à la lumière de la description qui va suivre. Cette description se réfère à des dessins annexés sur lesquels :

- la figure 1, déjà décrite, montre une tête magnétique connue montée verticalement,

- la figure 2, déjà décrite, montre l'allure du signal délivré par la tête précédente,

- la figure 3, déjà décrite, représente une tête magnétique connue montée horizontalement,

- la figure 4, déjà décrite, illustre un procédé connu de réalisation d'une tête horizontale,

- la figure 5 illustre 13 étapes (a à m) du procédé de fabrication conforme à l'invention,

- la figure 6 montre la tête magnétique obtenue finalement.

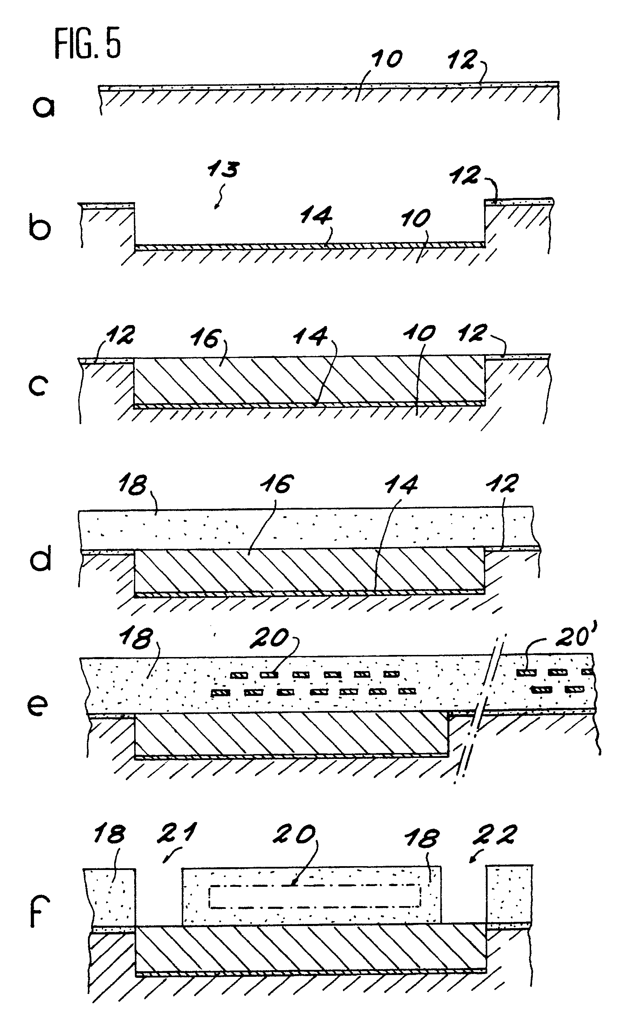

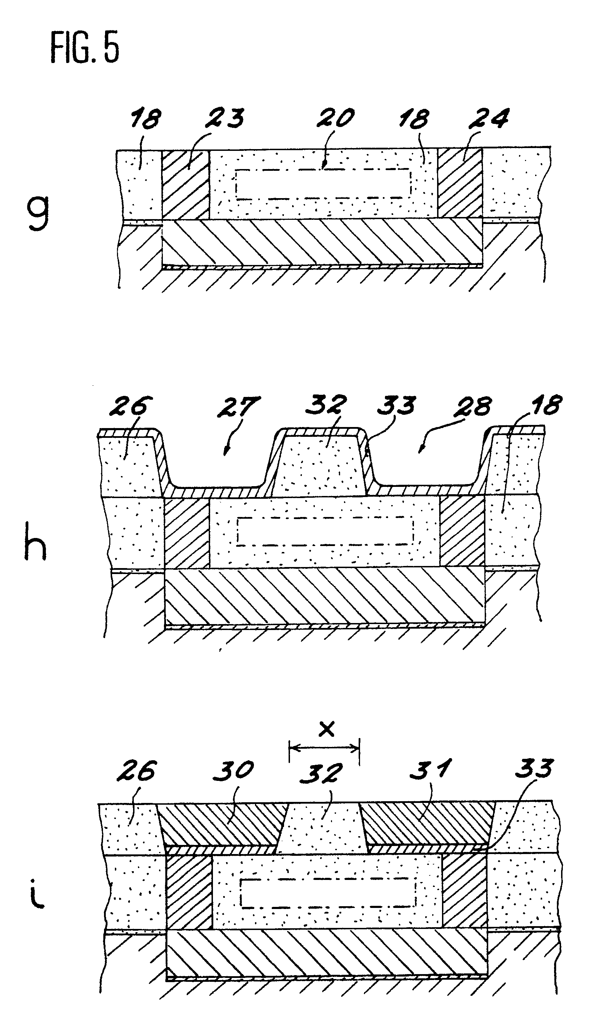

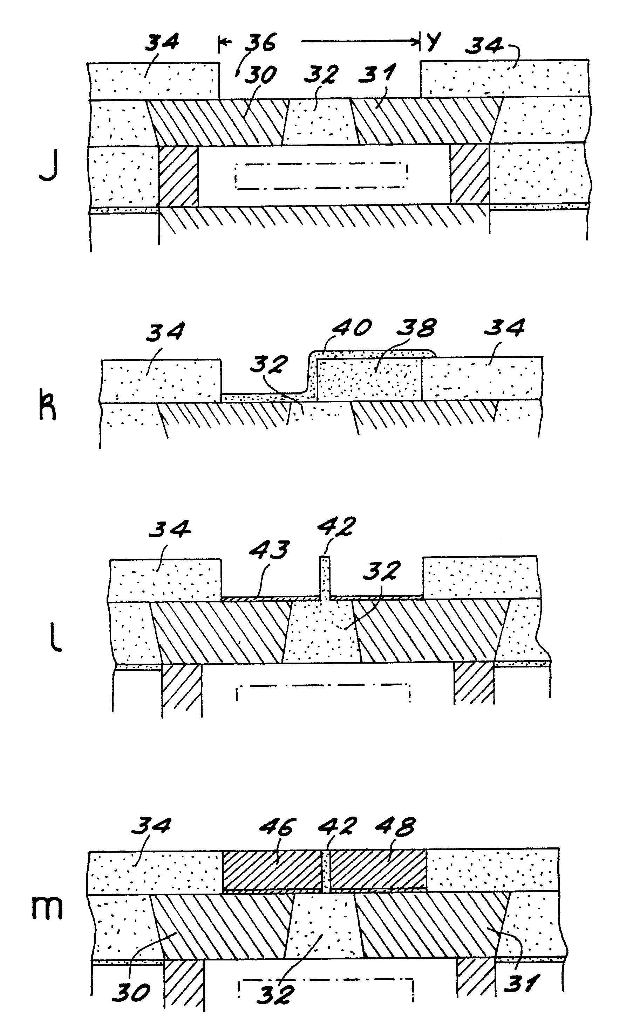

la figure 5 montre les étapes principales du procédé selon l'invention. Les opérations effectuées selon l'invention sont les suivantes :

- sur un substrat isolant 10 (par exemple en silicium) on forme une première couche isolante 12 (par exemple d'oxyde de silicium), (partie a),

- on grave la couche isolante 12 et le substrat 10 pour former un premier caisson 13, (partie b),

- on dépose sur l'ensemble une première couche conductrice 14 que l'on grave sélectivment ensuite de telle sorte qu'elle ne subsiste qu'au fond du premier caisson 13, (partie b),

- on dépose, par une première électrolyse prenant la couche conductrice 14 comme électrode, une première couche magnétique 16 qui remplit le caisson 13, cette première couche magnétique 16 affleurant à la surface de la première couche isolante 12, (partie c) ; cette couche magnétique se trouve donc enterrée dans le substrat ;

- on dépose sur l'ensemble une deuxième couche isolante 18, (partie d)

- on forme dans cette deuxième couche isolante 18 un bobinage électrique 20 (partie e) ; une telle opération est décrite dans le brevet européen cité plus haut (figures 3 et 4 de ce brevet) ; on observera que ce bobinage se referme par des parties latérales (une seule est représentée) 20' qui sont dans le même plan que la partie centrale 20 ;

- on grave dans la deuxième couche isolante 18, de part et d'autre du bobinage 20, deux ouvertures 21, 22 atteignant la première couche magnétique 16, (partie f),

- on comble, par une seconde électrolyse utilisant la première couche conductrice 14 comme électrode, ces ouvertures pour constituer des plots magnétiques 23, 24, ces plots étant en bonne continuité magnétique avec la première couche magnétique 16 et affleurant à la surface de la deuxième couche isolante 18, (partie g),

- on dépose sur l'ensemble une troisième couche isolante 26, (partie h), par exemple en $SiO_2$ ou $Al_2O_3$, en résine polyimide, etc...,

- on grave un deuxième et un troisième caissons 27, 28 dans cette troisième couche isolante 26 au-dessus des plots magnétiques 23, 24, en laissant subsister, entre le deuxième et le troisième caissons, un îlot central isolant 32, (partie h),

- on dépose sur l'ensemble une deuxième couche conductrice 33 que l'on grave ensuite sélectivement pour ne la laisser subsister qu'au fond des deuxième et troisième caissons 27, 28, (partie h),

- on comble, par une troisième électrolyse prenant cette deuxième couche conductrice 33 comme électrode, le deuxième et le troisième caissons par une deuxième couche magnétique séparée en deux parties 30, 31 disposées de part et d'autre de l'îlot central isolant 32, cette couche affleurant à la surface de la troisième couche isolante 26, (partie i),

- on dépose sur l'ensemble une quatrième couche isolante dure de protection 34, (partie j),

- on grave dans cette quatrième couche 34 un quatrième caisson 36 au-dessus de l'îlot central isolant 32 et atteignant la deuxième couche magnétique 30, 31, (partie j),

- on réalise, dans ce quatrième caisson 36, un espaceur amagnétique mince centré sur l'îlot central isolant 32 ; un tel espaceur peut être obtenu comme décrit dans la demande de brevet européen citée plus haut par dépôt d'un isolant 38, gravure de cet isolant pour lui donner la forme d'une marche, dépôt d'une couche amagnétique 40, (partie k), puis gravure des parties horizontales et maintien de la paroi verticale 42, (partie l),

- on dépose sur l'ensemble une troisième couche conductrice 43 que l'on grave ensuite sélectivement pour ne la laisser subsister qu'au fond du quatrième caisson 36, de part et d'autre de l'espaceur 42, (partie l),

- on comble, par une quatrième électrolyse prenant la troisième couche conductrice 43 comme électrode, le quatrième caisson 36 par une troisième couche magnétique séparée en deux parties 46, 48 situées de part et d'autre de l'espaceur amagnétique 42, cette troisième couche magnétique affleurant à la surface de la couche dure de protection 34, (partie m). Il est donc inutile d'effectuer un polissage de la pièce comme dans l'art antérieur.

Dans ce procédé, les couches conductrices 14, 33, 43 peuvent être en cuivre, en chrome ou en tungstène, par exemple. Les couches magnétiques 16, 23, 24, 30, 31, 46, 48 peuvent être en Fe Ni de composition 80/20 par exemple pour obtenir une forte perméabilité magnétique. L'épaisseur de la couche magnétique 16 peut être de 1 à 5 µm. La paroi verticale 42 peut avoir une largeur comprise entre 0,05 et 1 µm.

La largeur X du plot central 32, (partie i), est comprise entre 1 et 5 µm.

L'épaisseur de la couche dure 34 peut être comprise entre 1 et 5 µm. La largeur Y de la gravure est comprise entre 5 et 15 µm, (partie j).

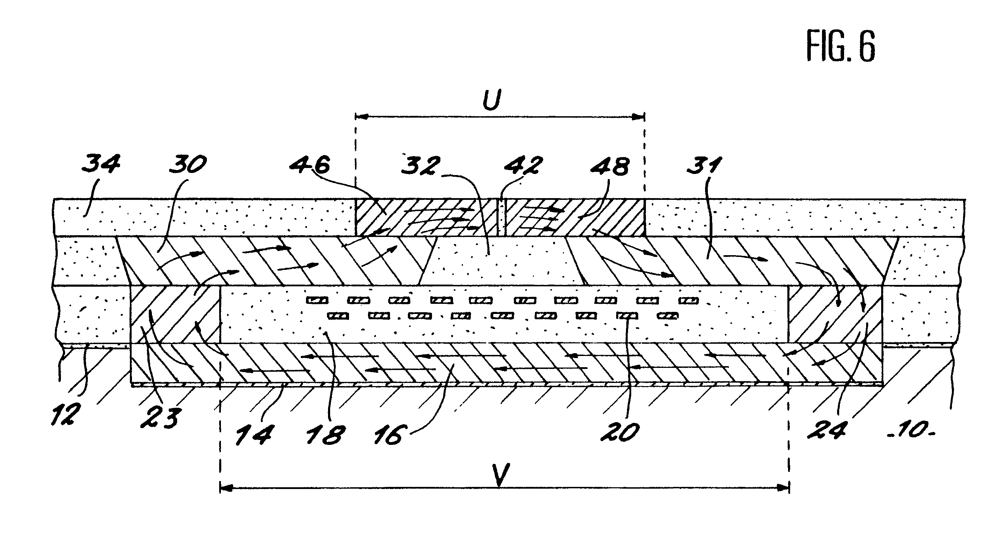

La figure 6 montre en coupe l'ensemble de la tête obtenue, avec les lignes de champ magnétique qui permettent de distinguer nettement la concentration du flux près de l'entrefer. La largeur U de l'ensemble des pièces 46 et 48 est de l'ordre de 10 µm alors que le bobinage 18 a une largeur comprise entre 120 à 200 µm. La partie non protégée des pièces polaires est donc très étroite.

## Revendications

1. Procédé de réalisation d'une tête magnétique en couches minces et à structure planaire comprenant les opérations suivantes :
   - dans un substrat (10) on grave un premier caisson (13),
   - on dépose, par une première électrolyse, une première couche magnétique (16) dans ce caisson (13),
   - on dépose sur l'ensemble une couche isolante (18),
   - on forme dans cette couche isolante (18) un bobinage électrique (20),
   ce procédé étant caractérisé par le fait qu'il comprend ensuite les opérations suivantes :
   - on grave dans la couche isolante (18), de part et d'autre du bobinage (20), deux ouvertures (21, 22) atteignant la première couche magnétique (16),
   - on comble, par une seconde électrolyse utilisant la première couche magnétique (16) comme électrode, ces ouvertures pour constituer des plots magnétiques (23, 24), ces plots étant en bonne continuité magnétique avec la première couche magnétique (16) et affleurant à la surface de la couche isolante (18),
   - on dépose sur l'ensemble une nouvelle couche isolante (26),
   - on grave un deuxième et un troisième caissons (27, 28) dans cette nouvelle couche isolante (26) au-dessus des plots magnétiques (23, 24), en laissant subsister, entre le deuxième et le troisième caissons, un îlot central isolant (32),

   - on dépose sur l'ensemble une couche conductrice (33) que l'on grave ensuite sélectivement pour ne la laisser subsister qu'au fond des deuxième et troisième caissons (27, 28),
   - on comble, par une troisième électrolyse prenant cette couche conductrice (33) comme électrode, le deuxième et le troisième caissons par une deuxième couche magnétique séparée en deux parties (30, 31) disposées de part et d'autre de l'îlot central iso-lant (32), cette couche affleurant à la surface de la troisième couche isolante (26),
   - on dépose sur l'ensemble une couche isolante dure de protection (34),
   - on grave dans cette couche isolante dure de protection (34) un quatrième caisson (36) au-dessus de l'îlot central isolant (32) et atteignant la deuxième couche magnétique (30, 31),
   - on réalise, dans ce quatrième caisson (36), un espa-ceur amagnétique mince (42) centré sur l'îlot central isolant (32),
   - on dépose sur l'ensemble une couche conductrice (43) que l'on grave ensuite sélectivement pour ne la laisser subsister qu'au fond du quatrième caisson (36), de part et d'autre de l'espaceur,
   - on comble, par une quatrième électrolyse prenant la dernière couche conductrice (43) comme électrode, le quatrième caisson (36) par une troisième couche magnétique séparée en deux parties (46, 48) situées de part et d'autre de l'espaceur amagnétique (42), cette troisième couche magnétique affleurant à la surface de la couche dure de protection (34).

2. Procédé selon la revendication 1, caractérisé par le fait que le substrat (10) étant isolant on dépose dans le fond du premier caisson (13) une couche conductrice (14) et l'on utilise cette couche comme électrode pour la première électrolyse.

3. Procédé selon la revendication 1, caractérisé par le fait que le substrat (10) étant en silicium, on dépose sur ce substrat (10) une couche isolante (12) et l'on grave cette couche isolante (12) et le substrat (10) pour former le premier caisson (13).

4. Tête magnétique en couches minces à structure planaire, obtenue par le procédé de la revendication 1, comprenant :
   - un substrat isolant (10),
   - un premier caisson (13) gravé dans le substrat,
- une première couche isolante (12) dpo-sée sur le substrat hors du caisson,
- une première couche magnétique (16) remplissant le caisson (13),
- une deuxième couche isolante (18) déposée sur l'ensemble,
- dans cette deuxième couche isolante (18), un bobina-ge électrique (20),
  cette tête magnétique étant caractérisée par le fait qu'elle comprend :
- dans la deuxième couche isolante (18), de part et d'autre du bobinage (20), deux ouvertures (21, 22) atteignant la première couche magnétique (16),
- deux plots magnétiques (23, 24) dans les deux ouver-tures (21, 22), ces plots étant en bonne continuité magnétique avec la première couche magnétique (16) et affleurant à la surface de la deuxième couche isolante (18),
- une troisième couche isolante (26),
- un deuxième et un troisième caissons (27, 28) gravé dans cette troisième couche isolante (26) au-dessus des plots magnétiques (23, 24), et entre le deuxième et le troisième caissons, un îlot central isolant (32),
- une deuxième couche magnétique séparée en deux parties (30, 31) disposées de part et d'autre de l'îlot central isolant (32), cette couche affleurant à la surface de la troisième couche isolante (26),
- sur l'ensemble, une quatrième couche isolante dure de protection (34),
- gravé dans cette quatrième couche (34), un quatrième caisson (36) au-dessus de l'îlot central isolant (32) et atteignant la deuxième couche magnétique (30, 31),
- dans ce quatrième caisson (36), un espa-ceur amagné-tique mince (42) centré sur l'îlot central isolant (32),
- sur l'ensemble, une troisième couche conductrice (43) gravée sélectivement pour ne subsister qu'au fond du quatrième caisson (36), de part et d'autre de l'espaceur,
- une troisième couche magnétique dans le quatrième caisson séparée en deux parties (46, 48) situées de part et d'autre de l'espaceur amagnétique (42), cette troisième couche magnétique affleurant à la surface de la couche dure de protection (34).

## Claims

1. Process for the production of a thin film, planar structure magnetic head comprising the following operations:
   - a first recess (13) is etched in a substrate (10),
   - a first magnetic layer (16) is deposited in said recess (13) by a first electrolysis,
   - an insulating layer (18) is deposited on the assembly,
   - an electric coil (20) is formed in said insulating layer (18),
   - said process being characterized in that it comprises the following stages:
   - on either side of the coil (20), two openings (21,22) reaching the first magnetic layer (16) are etched in the insulating layer (18),
   - these openings are filled by a second electrolysis using the first magnetic layer (16) as the electrode so as to form magnetic contact pads (23,24), which are in good magnetic continuity with the first magnetic layer (16) and which are flush with the surface of the insulating layer (18),
   - a new insulating layer (26) is deposited on the assembly,
   - a second and a third recesses (27,28) are etched in said new insulating layer (26) above the magnetic contact pads (23,24), whilst leaving a central insulating island (32) between the second and third recesses,
   - on the assembly is deposited a conductive layer (33), which is then selectively etched, so that it only remains at the bottom of the second and third recesses (27,28),
   - the second and third recesses are filled by a third electrolysis using said conductive layer (33) as the electrode with a second magnetic layer subdivided into two parts (30,31) located on either side of the central insulating island (32), said layer being flush with the surface of the third insulating layer (26),
   - a hard, protective insulating layer (34) is deposited on the assembly,
   - in said hard, protective insulating layer (34) is etched a fourth recess (36) above the central insulating island (32) and reaching the second magnetic layer (30,31),
   - a thin amagnetic spacer (42) centred on the central insulating island (32) is formed in said fourth recess (36),
   - on the assembly is deposited a conductive layer (43), which is then selectively etched so as to only leave it at the bottom of the fourth recess (36) on either side of the spacer and

- by a fourth electrolysis using the final conductive layer (43) as an electrode, the fourth recess (36) is filled with a third magnetic layer subdivided into two portions (46,48) located on either side of the amagnetic spacer (42), said third magnetic layer being flush with the surface of the hard protective layer (34).

2. Process according to claim 1, characterized in that as the substrate (10) is insulating, in the bottom of the first recess (13) is deposited a conductive layer (14) and said layer is used as the electrode for the first electrolysis.

3. Process according to claim 1, characterized in that as the substrate (10) is of silicon, on said substrate (10) is deposited an insulating layer (12) and the latter is etched, together with the substrate (10) in order to form the first recess (13).

4. Thin film,planar structure magnetic head obtained by the process of claim 1, comprising an insulating substrate (10), a first recess (13) etched in said substrate, a first insulating layer (12) deposited on the substrate outside the recess, a first magnetic layer (16) filling the recess (13), a second insulating layer (18) deposited on the assembly and in said second insulating layer (18) an electric coil (20), said magnetic head being characterized in that it comprises:

- in the second insulating layer (18) on either side of the coil (20), two openings (21,22) reaching the first magnetic layer (16),
- two magnetic contact pads (23,24) in the two openings (21,22) said contact pads being in good magnetic continuity with the first magnetic layer (16) and flush with the surface of the second insulating layer (18),
- a third insulating layer (26),
- a second and a third recesses (27,28) etched in said third insulating layer (26) above the magnetic contact pads (23,24) and between the second and third recesses a central insulating island (32),
- a second magnetic layer subdivided into two portions (30,31) on either side of the central insulating island (32), said layer being flush with the surface of the third insulating layer (26),
- on the assembly, a fourth hard, protective insulating layer (34),
- etched in said fourth layer (34), a fourth recess (36) above the central insulating island (32) and reaching the second magnetic layer (30,31),
- in said fourth recess (36), a thin amagnetic spacer (42) centred on the central insulating island (32),
- on the assembly, a third conductive layer (43) which is selectively etched so as to only lead it at the bottom of the fourth recess (36) on either side of the spacer and
- a third magnetic layer in the fourth recess subdivided into two portions (46,48) located on either side of the amagnetic spacer (42), said third magnetic layer being flush with the surface of the hard protective layer (34).

**Ansprüche**

1. Verfahren zum Herstellen eines Dünnfilmmagnetkopfes mit Planarstruktur mit folgenden Verfahrensschritten:
   - man ätzt eine erste Wanne (13) in ein Substrat (10),
   - man scheidet durch eine erste Elektrolyse eine erste magnetische Schicht (16) in diese Wanne (13) ab,
   - man scheidet auf die Anordnung eine isolierende Schicht (18) ab,
   - man bildet in dieser Isolierschicht (18) eine elektrische Windung (20),
   wobei dieses Verfahren gekennzeichnet ist durch die Tatsache, daß es anschließend folgende Verfahrensschritte aufweist:
   - man ätzt auf der einen und der anderen Seite der Windung (20) zwei Öffnungen (21, 22) in die Isolierschicht (18), die die erste magnetische Schicht (16) erreichen,
   - man füllt durch eine zweite Elektrolyse, die die erste magnetische Schicht (16) als Elektrode verwendet, diese Öffnungen, um magnetische Punkte (23, 24) zu bilden, diese Punkte sind magnetisch kontinuierlich mit der ersten magnetischen Schicht (16) und sind bündig mit der Oberfläche der Isolierschicht (18),
   - man scheidet auf die Anordnung eine neue Isolierschicht (26) ab,
   - man ätzt eine zweite und eine dritte Wanne (27, 28) in diese neue Isolierschicht (26) oberhalb der Magnetpunkte (23, 24), wobei man zwischen der zweiten und dritten Wanne eine zentrale, isolierende Insel (32) stehen läßt,

- man scheidet auf die Anordnung eine leitfähige Schicht (33) ab, die man anschließend selektiv ätzt, um sie nur am Boden der zweiten und dritten Wanne (27, 28) stehen zu lassen,

- man füllt durch eine dritte Elektrolyse, die diese leitfähige Schicht als Elektrode (33) nimmt, die zweite und dritte Wanne mit einer zweiten, in zwei Teile (30, 31) getrennten, magnetischen Schicht, die auf der einen und der anderen Seite der zentralen, isolierenden Insel (32) angeordnet sind, wobei diese Schicht mit der Oberfläche der dritten isolierenden Schicht (26) bündig ist,

- man scheidet auf die Anordnung eine isolierende, harte Schutzschicht (34) ab,

- man ätzt in diese isolierend, harte Schutzschicht (34) eine vierte Wanne (36) oberhalb der zentralen, isolierenden Insel (32), die die zweite magnetische Schicht (30, 31) erreicht, man bildet in dieser vierten Wanne (36) ein unmagnetisches, dünnes Abstandsstück (42), das auf der isolierenden, zentralen Insel (32) zentriert ist,

- man scheidet auf die Anordnung eine leitfähige Schicht (43) ab, die man anschließend selektiv ätzt, um sie nur am Boden der Wanne auf der einen und der anderen Seite des Abstandsstückes stehen zu lassen,

- man füllt durch eine vierte Elektrolyse, die die letzte leitfähige Schicht (43) als Elektrode nimmt, die vierte Wanne (36) mit einer dritten, in zweite Teile (46, 48) getrennten, magnetischen Schicht, die auf der einen und der anderen Seite des unmagnetischen Abstandstückes (42) angeordnet sind, wobei diese dritte magnetische Schicht mit der Oberfläche der harten Schutzschicht (34) bündig ist.

2. Verfahren nach Anspruch 1, gekennzeichnet durch die Tatsache, daß man, wenn das Substrat (10) isolierend ist, auf den Boden der ersten Wanne (13) eine leitfähige Schicht abscheidet und man diese Schicht als Elektrode für die erste Elektrolyse verwendet.

3. Verfahren nach Anspruch 1, gekennzeichnet durch die Tatsache, daß man, wenn das Substrat (10) aus Silizium besteht, auf dem Substrat (10) eine isolierende Schicht (12) abscheidet und man diese isolierende Schicht (12) und das Substrat (10) ätzt, um die erste Wanne zu bilden.

4. Dünnfilmmagnetkopf mit Planarstruktur, wie er nach dem Verfahren nach Anspruch 1 erhalten wird mit:

- einem isolierenden Substrat (10), einer ersten, in das Substrat geätzten Wanne (13),

- einer ersten, auf dem Substrat außerhalb der Wanne abgeschiedenen, isolierenden Schicht (12),

- einer ersten, die Wanne (13) füllenden, magnetischen Schicht (16),

- einer zweiten, auf der Anordnung abgeschiedenen, isolierenden Schicht,

- einer elektrischen Wicklung (20) in dieser zweiten isolierenden Schicht (18),

wobei dieser Magnetkopf gekennzeichnet ist durch die Tatsache, daß er umfaßt:

- in der zweiten isolierenden Schicht (18) auf der einen und der anderen Seite der Wicklung (20) zwei Öffnungen (21, 22), die die erste magnetische Schicht (16) erreichen,

- zwei magnetische Punkte (23, 24) in den beiden Öffnungen (21, 22). wobei diese Punkte magnetisch kontinuierlich mit der ersten magnetischen Schicht (16) sind und mit der Oberfläche der zweiten isolierenden Schicht (18) bündig sind,

- eine dritte isolierende Schicht (26).

- eine zweite und eine dritte Wanne (27, 28), die in diese dritte isolierende Schicht (26) oberhalb der magnetischen Punkte (23, 24) geätzt sind, und eine zentrale, isolierende Insel (32) zwischen der zweiten und dritten Wanne.

- eine zweite in zwei Teile (30, 31) getrennte, magnetische Schicht. die auf der einen und der anderen Seite der zentralen, isolierenden Insel (32) angeordnet sind, wobei diese Schicht mit der Oberfläche der dritten solierenden Schicht (26) bündig ist,

- eine vierte isolierende, harte Schutzschicht (34) auf der Anordnung,

- eine vierte, in diese vierte Schicht (34) geätzte Wanne (36) oberhalb der zentralen, isolierenden Insel (32), die die zweite magnetische Schicht (30, 31) berührt,

- ein unmagnetisches, dünnes Abstandsstück (42) in dieser vierten Wanne (36), das auf der zentralen, isolierenden Insel (32) zentriert ist,

- eine dritte leitfähige Schicht (43) auf der Anordnung, die selektiv geätzt wird, um nur auf den Boden der vierten Wanne (36) auf der einen und der anderen Seite des Abstandstükkes übrig zu bleiben,

- eine dritte magnetische Schicht in der vierten Wanne, die in zwei Teile (46, 48) geteilt ist, die sich auf der einen und der anderen Seite des unmagnetischen Abstandsstücks (42) befinden, wobei die dritte magnetische Schicht mit der Oberfläche der harten Schutzschicht (34) bündig ist.

FIG. 1

FIG. 4

FIG. 2

FIG. 3

# FIG. 5

a

10    12

b

13    14    10    12

c

12    16    14    10    12

d

18    16    14    12

e

18    20    20'

f

18    21    20    18    22

# FIG. 5

g

18  23  20  18  24

h

26  27  32  33  28  18

i

26  30  32  31  33

X

FIG. 6